# EUROPEAN PATENT SPECIFICATION

(11) **EP 3 033 482 B1**
(45) Date of publication and mention of the grant of the patent: **12.12.2018**
(21) Application number: 14724240.8
(22) Date of filing: 28.03.2014
(51) Int. Cl.: E21B 43/20

(54) **SYSTEM AND METHOD OF DETERMINING AND OPTIMIZING WATERFLOOD PERFORMANCE**
SYSTEM UND VERFAHREN ZUR BESTIMMUNG UND OPTIMIERUNG DER WASSERFLUTUNGSLEISTUNG
SYSTÈME ET PROCÉDÉ DE DÉTERMINATION ET D'OPTIMISATION DE PERFORMANCE D'INJECTION D'EAU

(30) Priority: 15.08.2013 US 201313968097
(43) Date of publication of application: 22.06.2016
(73) Proprietor: Chevron U.S.A. Inc., San Ramon, CA 94583 (US)
(72) Inventor: CHAMPENOY, Nicole Renee, San Ramon, California 94583 (US); FLEMING, Alexandra Ellyn Puleston, San Ramon, California 94583 (US)
(74) Representative: Haseltine Lake LLP
(86) International application number: PCT/US2014/032142
(87) International publication number: WO 2015/023319

(56) References cited:
- WO-A1-2004/095259
- US-A1- 2010 089 573
- US-A1- 2013 116 998
- H. LEE ET AL: "Identifying Injector-Producer Relationships in Waterflood using Hybrid Constrained Nonlinear Optimization", SOCIETY OF PETROLEUM ENGINEERS, SPE132359, 27 May 2010 (2010-05-27), pages 1-11, XP055062866,

## Description

### BACKGROUND

### Field

The present invention relates generally to a system and method of determining and optimizing waterflood performance.

### Background

Water-flooding is used as a technique to enhance oil recovery (EOR). Water is injected in a controlled manner in order to provide pressure support that can slowly sweep oil into the production wells. In enhanced oil recovery (EOR) process, fluids such as water are injected to increase the amount of oil that can be extracted from the reservoir. The selection of injecting locations in reservoir areas can become an important issue in waterflood management and optimization as well as an accurate assessment of the volume of water needed to inject.

Conventional analytical reservoir engineering techniques define waterflood injector areas by operation constraints or geographic areas. Recovery Factor (RF) versus Pore Volumes Injected (PVI) and Voidage Replacement Ratio (VRR) over time are then calculated within these operationally defined areas to determine water flood performance and how the performance can be potentially optimized.

However, because reservoirs in the subsurface are not bounded by operational limits, fluid flow and the impact of injectors can extend farther than these artificially set operational limits. Hence, methods and systems of determining and optimizing waterflood that solve the above and other deficiencies of the conventional methods and systems are needed. Reference may be made to any of:
US 2013/0116998 A1, which relates to a computerized method and system for deriving a statistical reservoir model of associations between injecting wells and producing wells;
WO 2004/095259 A1, which relates to a method for predicting the performance of large-scale hydrocarbon-bearing reservoir floods;
US 2010/089573 A1, which relates to a method for recovering heavy/viscous oils from a subterranean formation; and
a paper by H. Lee et al, entitled "Identifying Injector-Producer Relationships in Waterflood using Hybrid Constrained Nonlinear Optimization", Society Of Petroleum Engineers, SPE132359.

### SUMMARY

The present invention is defined by the independent claims, to which reference should now be made.

Specific embodiments are defined in the dependent claims.

Aspects of embodiments of the present invention include computer readable media encoded with computer executable instructions for performing any of the foregoing methods and/or for controlling any of the foregoing systems.

### BRIEF DESCRIPTION OF THE DRAWINGS

Other features described herein will be more readily apparent to those skilled in the art when reading the following detailed description in connection with the accompanying drawings, wherein:
FIG. 1 is a flow chart illustrating steps of a method to determine a) infill well count and infill well locations to maintain a desired VRR, b) determine a number of injectors needed from RF vs. PVI, c) drilling schedule, d) desired injection rates, and e) incremental reserves (production profiles), according to an embodiment of the present invention;
FIG. 2A-2C show regions associated with different injector wells defined by results from Capacitance Resistance Modeling (CRM) in an oil field, according to an embodiment of the present invention;
FIG. 3 is an illustration of an example with 3 injector wells and one producer well to demonstrate how calculations are made utilizing the results from Capacitance Resistance Modeling (CRM), according to an embodiment of the present invention;
FIG. 4 shows an example of water injection influence map in an oil reservoir field, according to an embodiment of the present invention;
FIG. 5 shows a plot of a recovery factor (RF) versus pore volumes injected (PVI) for each injector region, according to an embodiment of the present invention;
FIG. 6 shows the plot of recovery factor RF vs. PVI shown in FIG. 5 fitted with a curve fit, according to an embodiment of the present invention;
FIG. 7 shows the plot of recovery factor RF vs. PVI shown in FIG. 5 fitted with the curve fit based on all historical data and fitted with curve fit based on best average historical performance data, according to an embodiment of the present invention;
FIG. 8 depicts a plot of VRR versus date or time with a target value set based on historic data, according to an embodiment of the present invention;
FIG. 9 is a flow chart of a procedure for determining a number of infill wells with drilling schedule to maintain a desired or target VRR, according to an embodiment of the present invention;
FIG. 10 is a plot of injected water volume (in light blue), produced water volume (in dark blue), produced oil volume (in green) as a function of date or time for a certain region in the oil field, according to an embodiment of the present invention;
FIG. 11 is a plot of VRR vs. time, for a certain region in the oil field, according to an embodiment of the present invention;
FIG. 12 is a plot of RF vs. PVI, for a certain region in the oil field, according to an embodiment of the present invention;
FIG. 13 is a plot of injected water volume (in light blue), produced water volume (in dark blue), and produced oil volume (in green) as a function of date or time, for all the oil field taking into account all water influence regions, according to an embodiment of the present invention;
FIG. 14 is a plot of VRR vs. time, for the oil field as whole taking into account all influence regions, according to an embodiment of the present invention;
FIG. 15 is a plot of RF vs. PVI, for the oil field as whole taking into account all waterflood influence regions, according to an embodiment of the present invention;
FIG. 16 depicts a waterflood influence map (in blue) superposed to contour maps of current net pay (or remaining oil in place), according to an embodiment of the present invention; and
FIG. 17 is a schematic diagram representing a computer system for implementing the method, according to an embodiment of the present invention.

### DETAILED DESCRIPTION

According to an embodiment of the present invention, producer-to-injector connectivity parameters Fij's derived from Capacitance Resistance Models (CRM) can be used to define injector influence regions based on actual measured reservoir fluid flow response and pressure (utilizing Fij's to allocated oil water and gas to each injector). For each injector region, Recovery Factor (RF), Pore Volumes Injected (PVI) and Voidage Replacement Ratio (VRR) can then be calculated. RF vs. PVI and VRR vs. time can then be plotted for each region. The injector influence regions defined by the CRM overlap because injection into the subsurface will interfere with each other and not be isolated. This is particularly the case in field with higher permeabilities.

The injector influence regions calculations can be used to optimize current injection and to predict additional injection that may be needed to achieve a maximum recovery factor RF with waterflooding. In one embodiment, the calculations are performed by running a curve fit on RF vs. PVI curves constrained by target VRRs. In one embodiment, CRM results can be mapped to show relative water injection influence (WII) over the field over certain time periods or all of the field life. When coupled with a Hydrocarbon Pore Thickness (HPT) map, injector and producers infill locations can be identified. This may provide infill well count, infill well locations, drilling schedule, desired injection, incremental reserves or production profile. The term "infill locations" or "infill wells" is used herein to define location of wells that are provided in an area between existing production wells. For example, infill producing wells correspond to producing wells that are added to an area between already existing producing wells.

The Remaining Resource Assessment (RRA) method provides infill locations as well as a total incremental potential assessment based on map based techniques and probabilistic methods. A result of the RRA is generating a remaining resource map (remaining hydrocarbon pore thickness maps) that can be utilized to identify thick areas of remaining net pay. However, additional analysis is needed to generate associate water injection, infill timing and production profiles as detailed out in this patent.

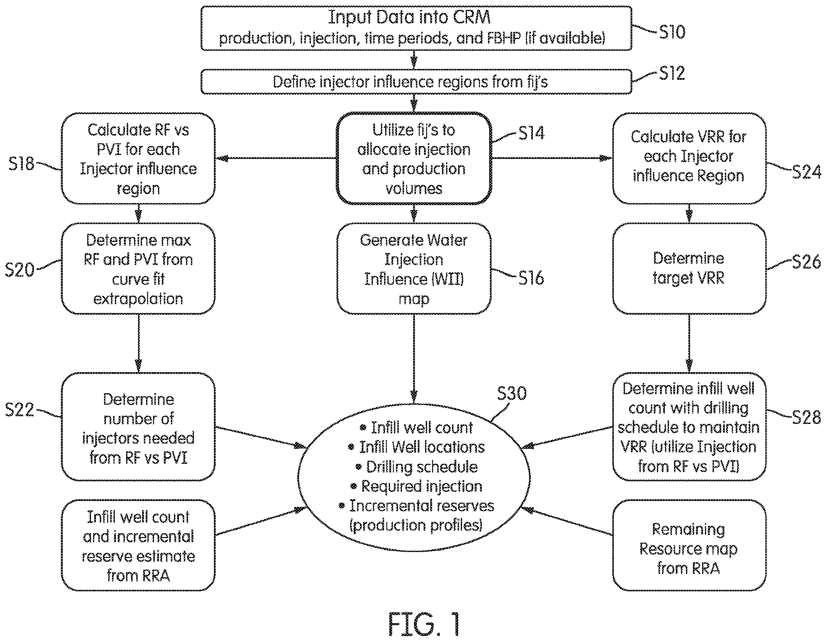

A method and a system are provided that integrate the HPT map generated from the RRA assessment method with the results of the capacitance resistance model (CRM) for VRR vs. time and RF vs. PVI for individual injector regions. FIG. 1 is a flow chart illustrating steps of a method integrating them to determine a) infill well count and infill well locations to maintain a desired VRR, b) determine a number of injectors needed from RF vs. PVI, c) drilling schedule, d) desired injection rates/volumes, and e) incremental reserves (production profiles), according to an embodiment of the present invention. The method includes inputting data into a CRM model, at S10. In one embodiment, inputting data includes inputting production, injection, time periods, and Flowing Bottom Hole Pressures (FBHP). In CRM, a set of analytical equations (continuity equations) are solved simultaneously to provide connectivities from injector to producers across the field.

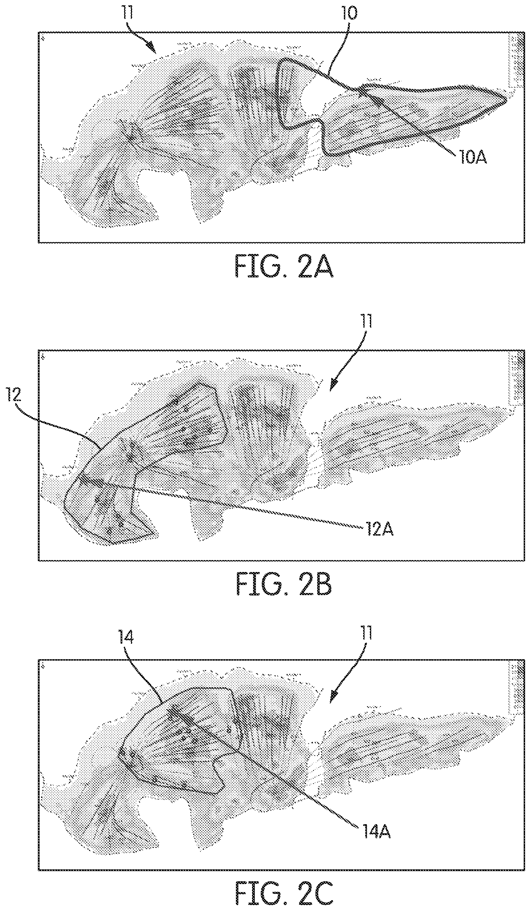

The method further includes defining injector influence regions from producer-to-injector connectivity parameters Fᵢⱼ's derived from the CRM model, at S12. In a field, there may be one or more injectors and one or more producers. The index i (where i is equal to 1, 2, ... , N) in inter-well connectivity parameter Fᵢⱼ corresponds the injector i and the index j (where j is equal to 1, 2, ..., M) in inter-well connectivity parameter Fᵢⱼ corresponds to producer j. In one embodiment, a region is defined for each injector. Therefore, if there are a plurality of injectors, a plurality of regions are defined. FIGs. 2A, 2B and 2C show various regions 10, 12 and 14 associated with various injector wells 10, 12A and 14A, respectively, in field 11. FIG. 2A shows a region 10 associated with injector well 10A in field 11. FIG. 2B shows a region 12 associated with injector well 12A in field 11. FIG. 2C shows a region 14 associated with injector well 14A in field 11. The regions 10, 12, 14 associated with injector 10A, 12A, 14A, respectively may overlap. For example, as shown in FIGs. 2B and 2C, region 12 overlaps with region 14. The regions are defined by CRM calculated Fᵢⱼ parameters and iterated with geologic interpretation. Injector influence regions size depends on the permeability and/or amount of injection volume (over certain time periods). For example, the higher is the permeability and/or the higher is the injection volume, the greater is the size of the injector influence region.

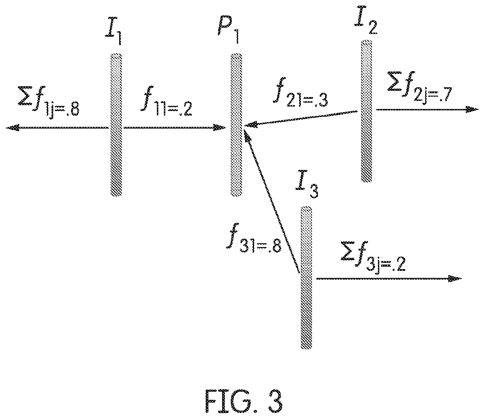

The method further includes allocating injection and production volumes using the Fᵢⱼ's parameters. In one embodiment, the allocated injection at injector i is equal to the product of parameter Fᵢⱼ by the water injection rate qi from injector I (i.e., allocated injection = Fᵢⱼ * qᵢ). In one embodiment, the Fᵢⱼ parameters are utilized to allocate production volumes to injectors. The production is allocated using proportional redistribution over producer in percentage value. FIG. 3 is an illustration of scenario with 3 injectors and one producer, according to an embodiment of the present invention. Injector I₁ contributes to oil production in production well P₁ through parameter F₁₁ (in this example, F₁₁ = 0.2). Injector I₂ contributes to oil production in production well P₁ through parameter F₂₁ (in this example, F₂₁ = 0.3). Injector I₃ contributes to oil production in production well P1 through parameter F₃₁ (in this example, F₃₁ = 0.8). Injector I₁ also contributes the oil production in other production wells through the sum of F₁ⱼ parameters (in this example, the sum is equal to 0.8). Injector I₂ also contributes the oil production in other production wells through the sum of F₂ⱼ parameters (in this example, the sum is equal to 0.7). Injector I₃ also contributes the oil production in other production wells through the sum of F₃ⱼ parameters (in this example, the sum is equal to 0.2).

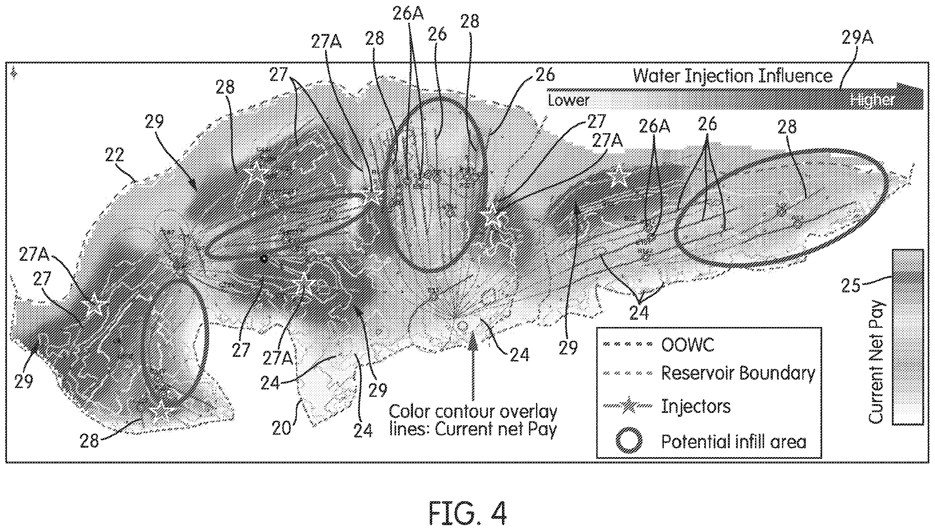

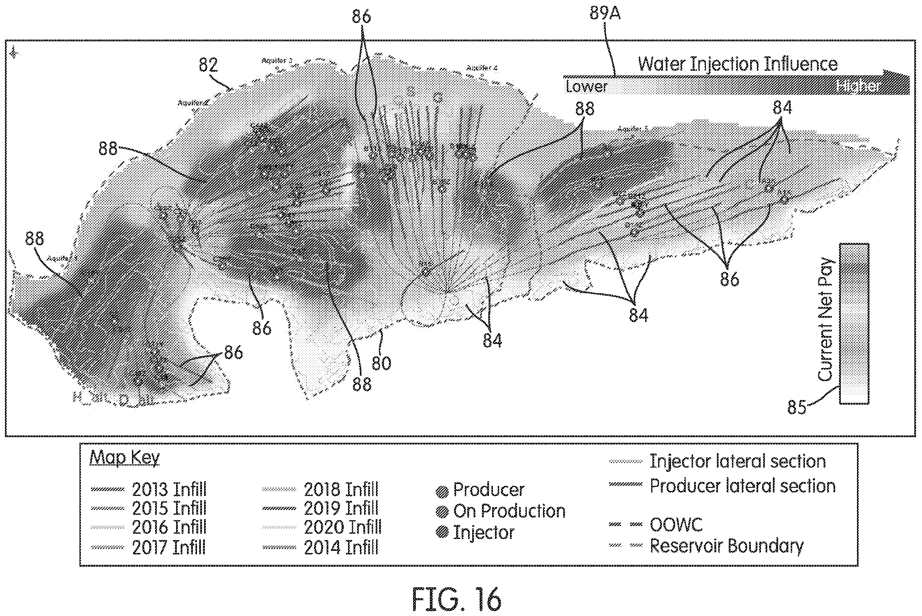

The method further includes generating a water injection influence (WII) map, at S16. In one embodiment, the water injection influence (WII) map can be generated by mapping the CRM results. The WII map is generated for a defined time period by posting the total volume of water injected over a time period at each injector and the total volume of associated water injection influence from each injector at each well, as defined by the parameters Fᵢⱼ. The producer wells will have multiple values of water influence, as each producer can be influenced by more than one injector. These values guide manually drawn contours to display a visual representation, from high to low, of water injection influence over the entire field from injectors to producers. Natural water drive in the reservoir is included in the map by adding pseudo-injection wells along the oil-water contact with allocated natural water drive values to simulate water drive. FIG. 4 shows an example of water injection influence map an oil reservoir field, according to an embodiment of the present invention. The brown dotted line 20 defines the up dip limit of the reservoir. The green dotted line defines the original oil water contact (OOWC). The solid contour lines in various colors 24 define the current net pay (Hydrocarbon Pore Thickness or HPT). A color key 25 on the right side of Fig. 4 is provided to define the current net pay. HPT corresponds to the remaining net pay after historical production has been accounted for. The producers are indicated generally by a green line 26 with a green circle 26A defining the middle of each producer. The water injectors are indicated by a blue line 27 and a blue star symbol 27A marks the middle of each selected injector well. The injectors selected for this water injection influence map are determined by the active injectors during the time period for which the map was generated. The red lines 28 indicate recently drilled wells with no production data. In one embodiment, as shown in FIG. 4, the injector and producer well are drilled horizontally. However, as it can be appreciated, one or more injector wells or one or more producer wells or both can be drilled at any angle relative to the surface. For example, the one or more injector wells or the one or more producer well can be drilled vertically. Waterflood Areas 29 with a higher influence from the waterflood are indicated by a darker blue color. A color scale 29A indicates water injection influence. The darker the blue color in areas 29, the higher is water injection influence in the areas 29. This WII map, when coupled with the HPT map, defines areas with high remaining resource, and regions that have higher water injection influence. When both of these maps are combined, potential infill areas in the black ovals are indicated by regions with high remaining resource and higher water injection influence. For example, as shown in FIG. 16, the infill well labeled "E" is positioned within a red contour line in the current net pay map corresponding to higher oil content. The red contour line area intersects or overlaps an area of water injection influence map in light to dark blue that corresponds to middle to higher water injection influence. Therefore, the infill well "E" is positioned so as to provide a greater retrieval of oil by selecting an area of higher oil content by also an area that is infiltrated by the water injection so as to collect the oil within the rock formation."

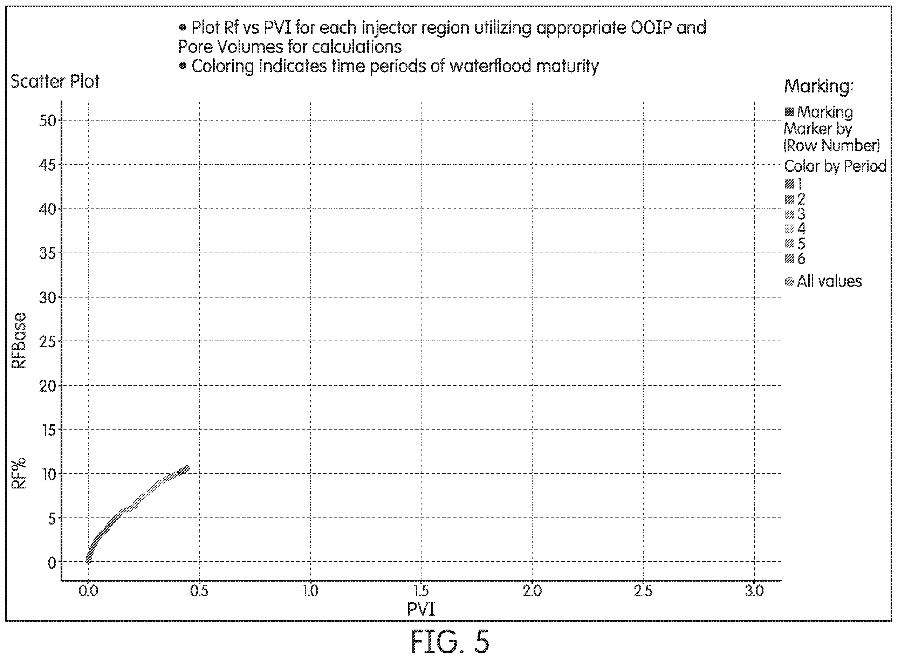

The method further includes calculating the recovery factor (RF) and pore volumes injected (PVI) for each injector influence region, at S18. The recovery factor (RF) is equal to oil produced divided by oil in place for a given injection region. Pore volumes injected (PVI) is equal to a volume of water injected divided by pore volume for that given injection region. The recovery factor (RF) versus pore volumes injected (PVI) can then be plotted for each injector influence region (or injection region). FIG. 5 shows a plot of a recovery factor (RF) versus pore volumes injected (PVI) for each injector region, according to an embodiment of the present invention. The plot of RF vs. PVI is obtained using appropriate oil in place (OOIP) and pore volumes. The y-axis corresponds to recovery factor RF and the x-axis corresponds to PVI. The curve contains various colored segments (in this example, there are 6 segments). Each colored segment (segment 1, segment 2, ... , segment 6) represented by one color represents a time period of waterflood maturity. Waterflood maturity is determined by slop change from point to point on this line. When a slop change occurs it indicates that the waterflood is maturing and more water is being produced with the oil. These time period definitions are subjective and could increase or decrease depending on how much granularity is needed for the analysis. The color data point represents historical data.

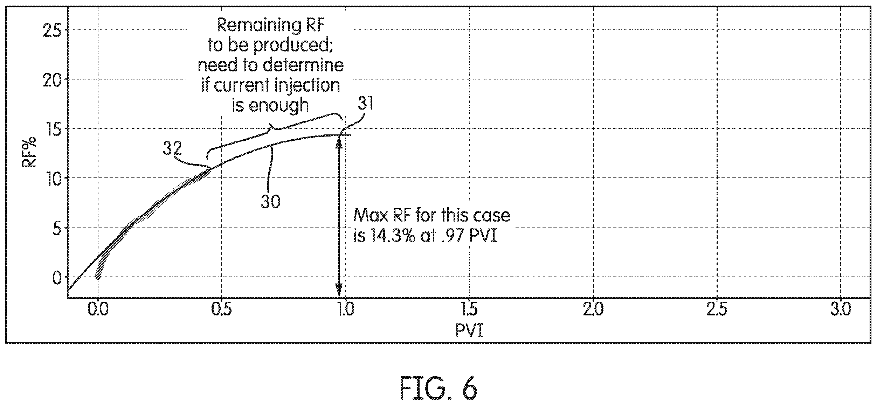

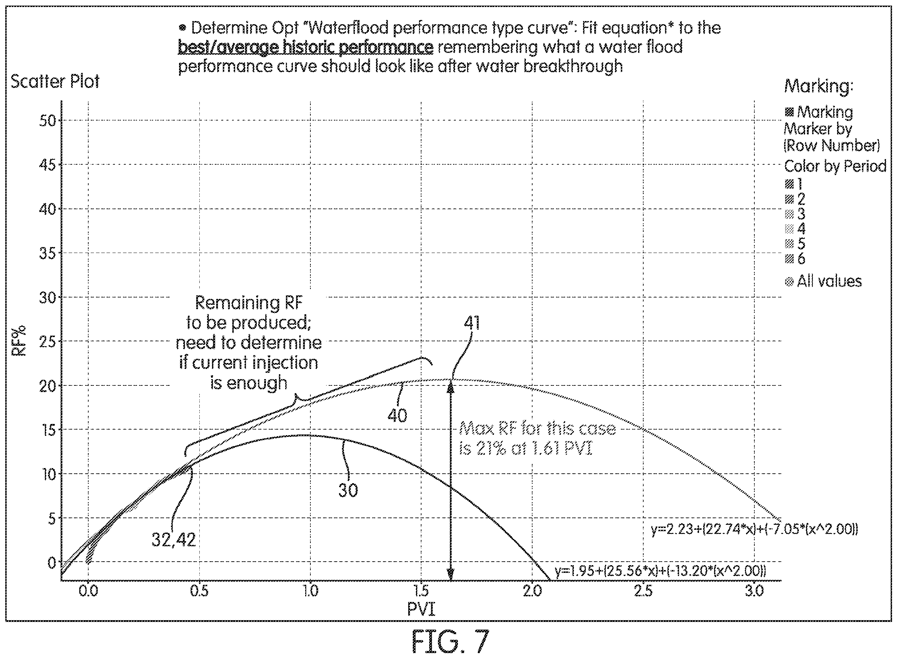

The method further includes determining a maximum of RF vs. PVI from a curve fit extrapolation, at S20. FIG. 6 shows the plot of recovery factor RF vs. PVI shown in FIG. 5 fitted with a curve fit 30, according to an embodiment of the present invention. The curve fit is then extrapolated to greater PVI values and a maximum of the curve fit RF vs. PVI is determined. In this example, the maximum RF 31 is determined to be about 14.3 % which using the curve provides a PVI of about 0.97. The interval between a last historical data point 32 (with a PVI of about 0.48) and the maximum point 31 (with a PVI of about 0.97) corresponds to the remaining RF to be produced to reach the maximum RF 31. The PVI difference between 0.97 and 0.48 is equal to 0.49. Next, associated incremental oil at the maximum RF is calculated and needed injection volume to hit target PVI is determined. The last data point in the curve fit is determined by when the derivative of the curve fit is zero. The method further includes determining, at S22, the volume of water based on PVI, and therefore based on historical injector well performance and the number of injection wells needed to attain this volume can be calculated. In another embodiment, instead of performing a curve fit on all historical data for RF vs. PVI, the curve fit is performed on best average historical performance data. FIG. 7 shows the plot of recovery factor RF vs. PVI shown in FIG. 5 fitted with the curve fit 30 based on all historical data and fitted with curve fit 40 based on best average historical performance data. The term "Best performance" is used herein to indicate when the waterflood performance curve RF vs. PVI is steepest, i.e. the injection is getting more barrels of oil out of the ground per volume of water injected. Similar to FIG. 6, the curve fit 40 is then extrapolated to greater PVI values and a maximum of the curve fit RF vs. PVI is determined (when the derivative of the curve is zero). In this case, the maximum RF 41 is determined to be about 21 % at a PVI of about 1.61. The interval between a last historical data point 42 (with a PVI of about 0.48) and the maximum data point 41 (with a PVI of about 1.61) corresponds to the remaining RF to be produced to reach the maximum RF 41. In this case, the PVI difference between 1.61 and 0.49 which is equal to 1.13.

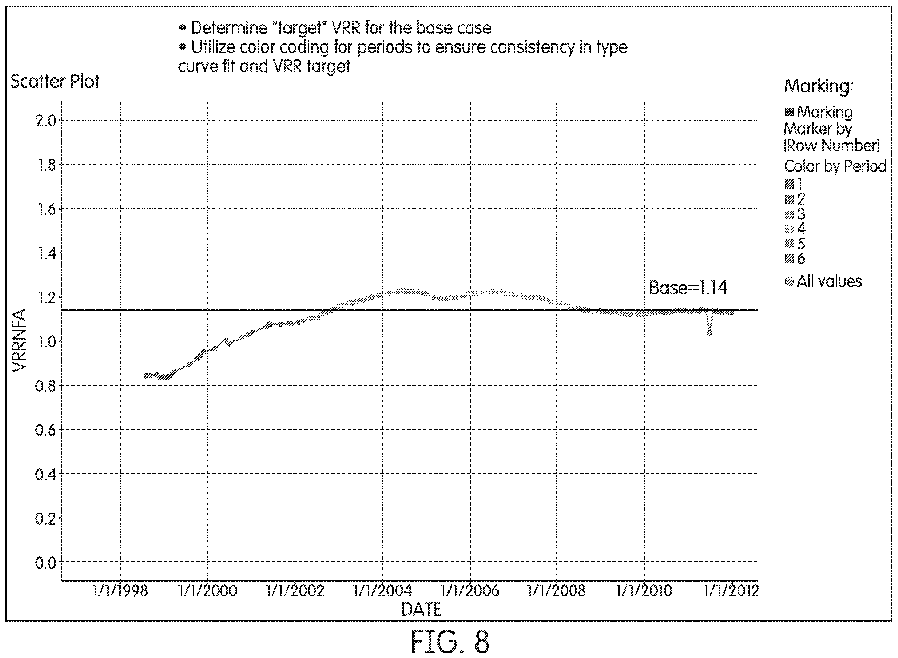

The method further includes calculating Voidage Replacement Ratio (VRR) within the each injector influence region, at S24. VRR is equal to water injection rate (e.g., in barrels) divided by the sum of volume of water produced and volume of gas produced (e.g., in reservoir barrels) and volume of oil produced (e.g., in reservoir barrels). The method also includes determining a target VRR, at S26. FIG. 8 depicts a plot of VRR versus date or time. Each colored segment of curve corresponds to a specific period of time. In this case, there are 6 periods of times numbered from 1 to 6, as shown in the color key on the right side of the plot. As shown in FIG. 8, the VRR starts lower than 1 at about 0.8 and increases to about 1.2 before decreasing slightly to about 1.14. In general, the VRR can be any value between about 0.8 and about 1.2 depending on the reservoir. For a heavier oil field, the VRR is usually greater than 1. In this case, the VRR of 1.14 represents the most recent VRR and is referred to as the base VRR. It is the target VRR for this particular example. In waterflood regions where the VRR is less than 1, injection may need to be increased. The VRR is calculated by the following equation: Water injection rate divided by the sum of water produced and gas produced (in reservoir Barrels) and oil produced (in reservoir barrels).

The method further includes determining a number of infill wells with drilling schedule to maintain a target VRR, at S28. VRR is a ratio between the volume of fluids produced (oil, gas and water) and the volume of water injected. The target VRR for the specific region with a specific number of injectors as discussed above with respect to FIG. 8 is 1.14. However, the VRR may vary when adding injectors. Therefore, an iterative method is needed to take into account newly added injectors. That is, iterate between the RF vs. PVI plot and VRR in order to honor the performance curves as well as the 1.14 constraint. The term "performance curves" is used herein to refer to the two curves we are iterating against, the RF vs. PVI and the VVR vs. time. This is done for each injector influence region. In the present example, there are about 6 injector regions and therefore, the iteration is performed for each or the 6 regions.

Using both the number of infill wells to maintain VRR and the number of needed injectors obtained from RF vs. PVI, the number of infill wells, the drilling schedule, infill well locations, desired injection, and associated incremental reserves (production profiles) are determined at S30.

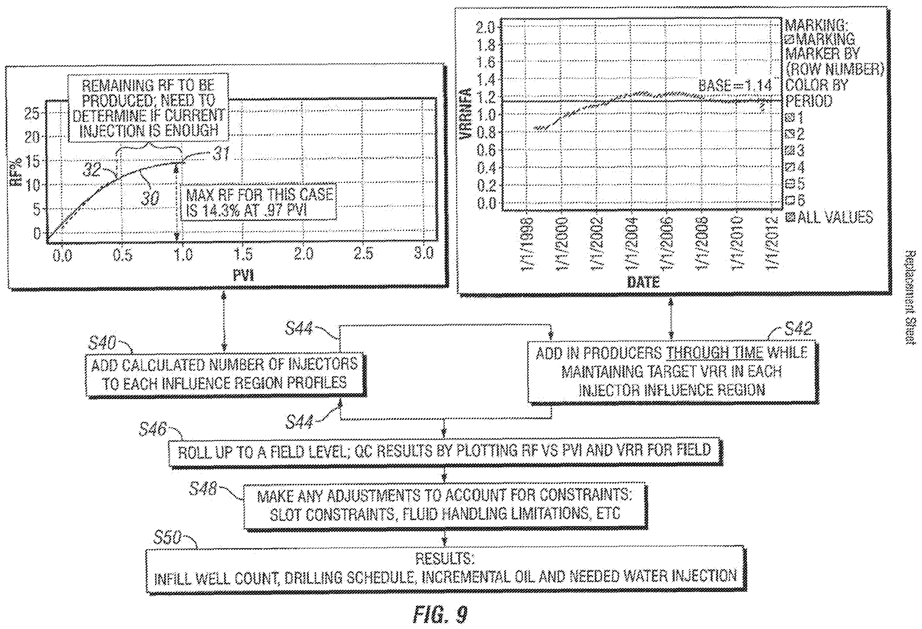

FIG. 9 is a flow chart of a procedure for determining a number of infill wells with drilling schedule to maintain a desired or target VRR, according to an embodiment of the present invention. The procedure includes adding the calculated number of injectors obtained from the RF vs. PVI data to each influence region, at S40. The procedure further includes adding producers through time while maintaining target VRR in each injector influence region, at S42. For example, for the region discussed above, the target VRR of about 1.14 is to be maintained. Next, the procedure is iterated between adding injectors and adding producers while maintaining target VRR in each injector influence region until. The iterations are stopped when enough infill producers have been added through time to maintain a flat VRR at the specified target VRR, at S44. The iteration is performed because both VRR and RF vs. PVI are dependent on each other because VRR and RF vs. PVI have injectors.

Next, the above iteration is applied to each region within the field and all regions as summed and RF vs. PVI and VRI for the whole field including all regions are assessed to verify that the results are within expected values, at S46. In other words, a quality control is performed to ensure that the obtained results are within expected ranges of values.

The procedure may further include making adjustments to account for constraints such as slot constraints, fluid handling limitations, etc., at S48. These facility constraints are honored in order to provide a more realistic application of the workflow to existing infrastructure versus showing and optimized waterflood performance with no surface constraints. Once the constraints are added in, one may have to go back and revisit the injector and producer count to ensure the VRR and RF vs. PVI curves are still honored within an acceptable limit. Results are then obtained at S50. The results include the number of infill production wells, drilling schedule, incremental oil and needed water injection, at S50. The number of infill wells as derived from the iterative process described above, the number of injector wells is from the curve fit of the RF vs. PVI curve, the locations are selected based on the combination of the WII map and the HPT map from RRA and the incremental production profiles are determined based on historical performance data as a proxy for production in the infill wells.

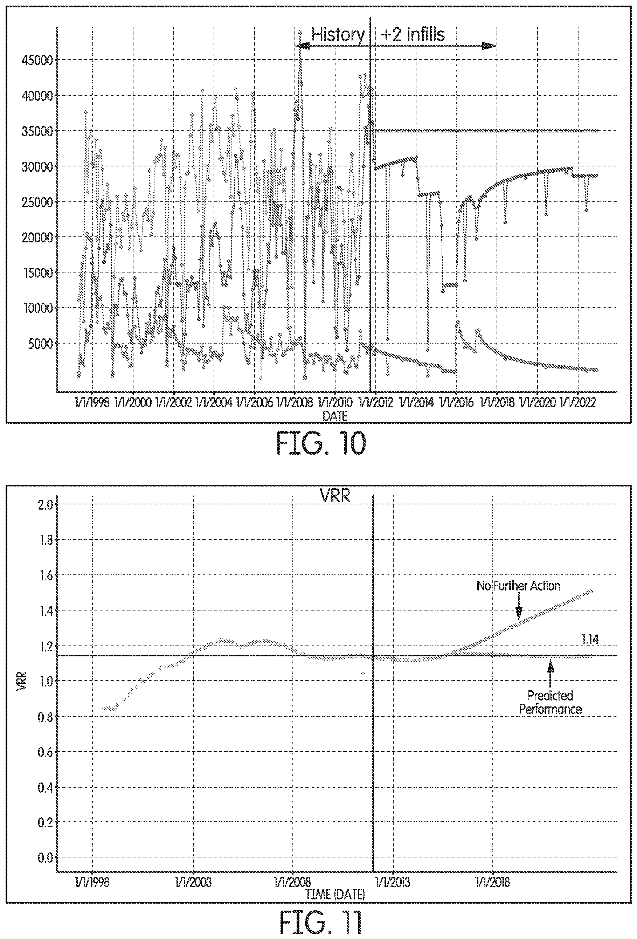

FIG. 10 is a plot of injected water volume (in light blue), produced water volume (in dark blue), produced oil volume (in green) as a function of date or time. The vertical black line separates the historical (past) measured data and the simulated or extrapolated data into the future when, for example, two infill production wells are added. The production volumes (oil, gas and water) associated with the two new infills is determined based on the historical production of infill wells in the field and simply replicated when the well comes on line. This is called a type curve approach for infill well estimations.

FIG. 11 is a plot of VRR vs. time, for a certain region in the oil field, according to an embodiment of the present invention. The vertical axis corresponds to the VRR and the horizontal axis corresponds to the time or date. The yellow curve is plot of the VRR with the portion to the left of the vertical black line corresponding to historical data and the portion to the right of the vertical black line corresponding to predicted performance when, for example, 2 infill production wells are added. In this example, as shown in this plot, the yellow curve VRR honors the constraint of the base VRR at 1.14 discussed in the previous paragraphs. The green portion of the VRR curve corresponds to a VRR if no action is taken, i.e., no infill wells are added.

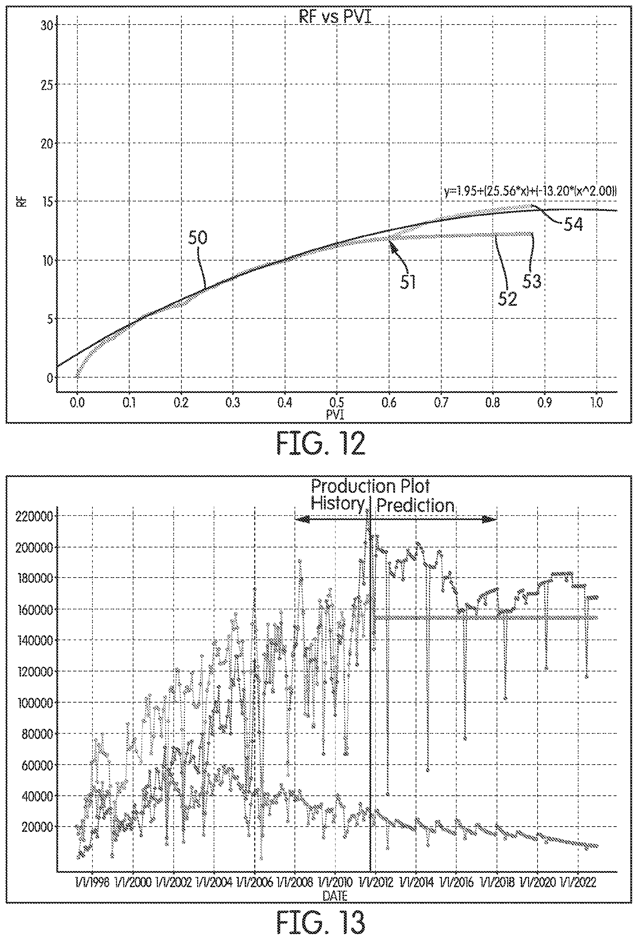

FIG. 12 is a plot of RF vs. PVI, for a certain region in the oil field, according to an embodiment of the present invention. The vertical axis corresponds to RF and the horizontal axis corresponds to PVI. The portion 50 of the green curve starting at about RF equal zero up to point 51 where RF is equal to about 12 corresponds to historical data. The portion 52 of the green curve starting at point 51 where RF is equal to 12 to point 53 where RF remains substantially equal to 12 corresponds to the extrapolated data without adding any additional infill production wells. The yellow curve which starts at point 51 where RF is equal to 12 and ends at point 54 where RF is approximately 14 is obtained when, for example, two additional infill wells are added. The black line curve is a curve fitted to the historical portion 50 and extrapolated to higher PVI's which corresponds to performance, as described in the previous paragraphs. As can be seen in this plot, the yellow curve is in agreement with the black curve (forecasted performance) whereas the green portion 52 deviates from the forecasted performance curve. Therefore, in this case, 2 infill wells are needed in this specific region in order to continue having the same waterflood performance as the historical waterflood performance. Without the additional 2 infill wells the RF vs. PVI performance will flatten out as shown by the green curve portion 52. This plot is provided for one injection region. However, the RF vs. PVI can be plotted for all injection regions in the oil field (in the present case there are 6 regions associated with the 6 injectors). However, as it can be appreciated the oil field can have any number of regions depending on the number of injectors (one or more regions). In the above examples, two infill wells are added, however, as it can be appreciated any number of infill wells (i.e., one or more infill wells) can be added to maintain a given historical performance.

FIG. 13 is a plot of injected water volume (in light blue), produced water volume (in dark blue), and produced oil volume (in green) as a function of date or time, for all the oil field taking into account all water influence regions, according to an embodiment of the present invention. The vertical black line separates the historical (past) measured data and the simulated or extrapolated data into the future when 15 infill production wells are added.

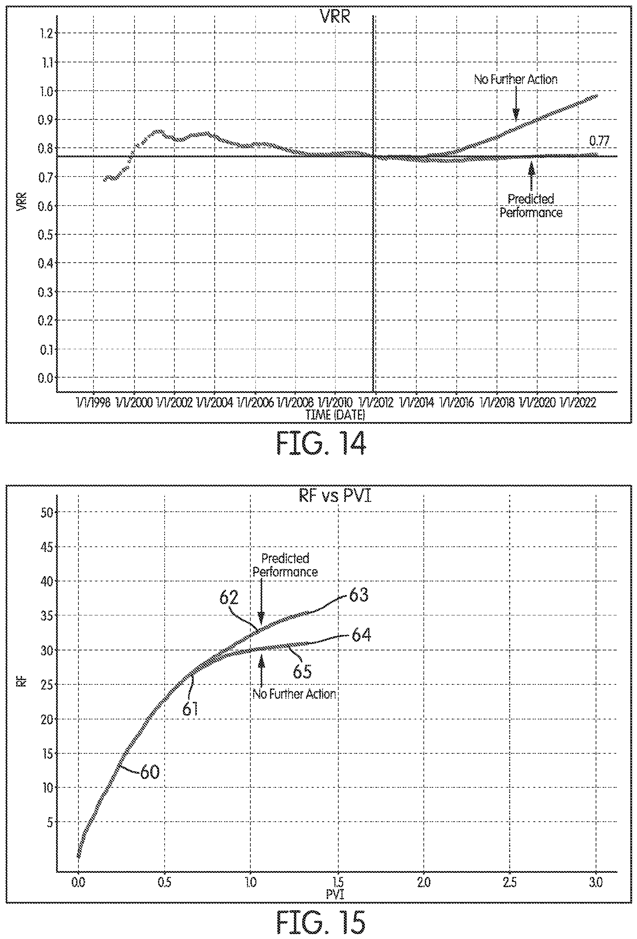

FIG. 14 is a plot of VRR vs. time, for the oil field as whole taking into account all influence regions, according to an embodiment of the present invention. The vertical axis corresponds to the VRR and the horizontal axis corresponds to the time or date. The blue curve is plot of the VRR with the portion to the left of the vertical black line corresponding to historical data and the portion to the right of the vertical black line corresponding to predicted performance when 15 infill production wells are added. In this example, as shown in this plot, the blue curve VRR honors the constraint of the base VRR of the global oil field at about 1.14. The red portion of the VRR curve corresponds to a VRR if no action is taken, i.e., no infill wells are added.

FIG. 15 is a plot of RF vs. PVI, for the oil field as whole taking into account all waterflood influence regions, according to an embodiment of the present invention. The vertical axis corresponds to RF and the horizontal axis corresponds to PVI. The portion 60 of the blue curve starting at about RF equal zero up to point 61 where RF is equal to about 27 corresponds to historical data. The portion 62 of the blue curve starting at point 61 where RF is equal to about 27 to point 63 where RF is substantially equal to 35 corresponds to the extrapolated data without adding any additional infill production wells. The red curve portion 65 which starts at point 61 where RF is equal to about 27 and ends at point 64 where RF is approximately 30 is obtained when 15 additional infill wells are added over the whole oil field. In no action is taken, i.e, without the additional 15 infill wells, the RF vs. PVI performance will flatten out as shown by the red curve portion 65.

FIG. 16 depicts a waterflood map (in blue) superposed to contour maps of current net pay (or remaining oil in place), according to an embodiment of the present invention. The brown dotted line 80 defines the up dip limit of the reservoir. The green dotted line 82 defines the original oil water contact (OOWC). The solid contour lines 84 in color define the current net pay (Hydrocarbon Pore Thickness). A color key 85 on the right side of Fig. 16 is provided and defines the current net pay. HPT corresponds to the remaining net pay after historical production has been accounted for. The producers are indicated generally by green lines 86 with a green or green/red circle 86A defining the middle of each producer. The green/red labeled producers correspond to the producers that are on production. The injectors are indicated by light blue colored lines 88. In one embodiment, as shown in FIG. 16, the injector and producer wells are drilled horizontally. However, as it can be appreciated, one or more injector wells or one or more producer wells or both can be drilled at any angle relative to the surface. For example, the one or more injector wells or the one or more producer well can be drilled vertically. Areas 89 with a higher influence from the waterflood are indicated by a darker blue color. A color scale 89A indicates water injection influence. The darker the blue color in areas 89, the higher is water injection influence in the areas 89. Infill producing wells are indicated on the map by various colors and are labeled by the letters A through S. The infill wells are added at different periods of time. For example, infill well shown as a red line is added in 2013 while infill well shown as purple line is scheduled for operation in 2019 and infill well shown as a yellow line is scheduled for operation in 2020, for example. The timing of operation of infill wells satisfies the analysis regarding VRR (shown in FIG. 14) and RF vs. PVI (shown in FIG. 15). In addition, the infill well are positioned where there is a greater overlap between water injection influence areas with higher water influence and zones within the current net pay map with the higher current net pay value. For example, as shown in FIG. 16, the infill well labeled "E" is positioned within a red contour line in the current net pay map corresponding to higher oil content. The red contour line area intersects or overlaps an area of water injection influence map in light to dark blue that corresponds to middle to higher water injection influence. Therefore, the infill well "E" is positioned so as to provide a greater retrieval of oil by selecting an area of higher oil content by also an area that is infiltrated by the water injection so as to collect the oil within the rock formation.

Table 1 below summaries various scenarios illustrating the impact of providing additional infill wells on oil production and RF, according to an embodiment of the present invention.

| **Case** | **Np 2011 (MMBO)** | **Np 2022 Existing wells** | **Np 2022 (MMBO)** | **RF (%)** | **Increment in Oil Production due to Infill wells (MMBO)** |
|---|---|---|---|---|---|
| **No Action (i.e., No infill wells are added** | 184 | 218 | 218 | 30.9 | NA |
| **Base Case (15 Infill Wells are added)** | 184 | 218 | 249 | 35.4 | 31 |
| **Unconstrained Case (68 Infill wells, 17 Injectors are added)** | 184 | 218 | 371 | 52.6 | 153 |

In the case where no action is taken in the oil field (i.e., no additional infill wells are drilled), the production is about 184 millions of barrels of oil (MMBO) in 2011 (e.g., present time) with a number of existing wells of about 218, when extrapolating to the future (e.g., in 2022) while maintaining the same number of existing wells the production may increase to about 218 MMBO. This provides a recovery factor RF of about 30.9. On the other hand, in the base case, with an initial production in 2011 of about 184 MMBO with 218 existing wells, the production increases to 249 MMBO with the addition of 15 infill wells (no injector wells are added). Therefore, an increment in production of about 31 MMBO (249 MMBO - 218 MMBO) is achieved when adding 15 infill wells compared to the case where no infill wells are added. This provides a recovery factor of about 35.4 %. In the unconstrained case, 68 infill wells are added and 17 injectors are also added. In this case, the projected oil production in 2022 is about 371 MMBO. In this case, the increment in oil production due to infill well (and injector wells) is about 163 MMBO. This provides a recovery factor of about 52.6%. The base case is recommended if no additional injection or fluid handling capability is available. Furthermore, for the base case, the ratio of increment in oil production per infill well is about 2.06 MMBO per infill well (31 MMBO/15 infills). For the unconstrained case, the ratio of increment in oil production per infill well is about 2.25 MMBO per infill well (153 MMBO/68 infills). However, in the unconstrained case, 17 additional injectors are needed to achieve a gain of about 0.25 MMBO per infill well relative to the base case. This may not be cost effective, as the gain of 0.25 MMBO per infill well is relatively small considering the relatively large investment in adding 17 injectors (including facilities and water handling investments). Therefore, overall, the base case is the recommended case for this particular field to be the best scenario wherein only infill wells are added while maintaining the same number of initial injector wells.

In one embodiment, the method or methods described above can be implemented as a series of instructions which can be executed by a computer, the computer having one or more processors. As it can be appreciated, the term "computer" is used herein to encompass any type of computing system or device including a personal computer (e.g., a desktop computer, a laptop computer, or any other handheld computing device), or a mainframe computer (e.g., an IBM mainframe), or a supercomputer (e.g., a CRAY computer), or a plurality of networked computers in a distributed computing environment.

For example, the method(s) may be implemented as a software program application which can be stored in a computer readable medium such as hard disks, CDROMs, optical disks, DVDs, magnetic optical disks, RAMs, EPROMs, EEPROMs, magnetic or optical cards, flash cards (e.g., a USB flash card), PCMCIA memory cards, smart cards, or other media.

Alternatively, a portion or the whole software program product can be downloaded from a remote computer or server via a network such as the internet, an ATM network, a wide area network (WAN) or a local area network.

Alternatively, instead or in addition to implementing the method as computer program product(s) (e.g., as software products) embodied in a computer, the method can be implemented as hardware in which for example an application specific integrated circuit (ASIC) can be designed to implement the method.

Various databases can be used which may be, include, or interface to, for example, an Oracle™ relational database sold commercially by Oracle Corporation. Other databases, such as Informix™, DB2 (Database 2) or other data storage, including file-based, or query formats, platforms, or resources such as OLAP (On Line Analytical Processing), SQL (Standard Query Language), a SAN (storage area network), Microsoft Access™ or others may also be used, incorporated, or accessed. The database may comprise one or more such databases that reside in one or more physical devices and in one or more physical locations. The database may store a plurality of types of data and/or files and associated data or file descriptions, administrative information, or any other data.

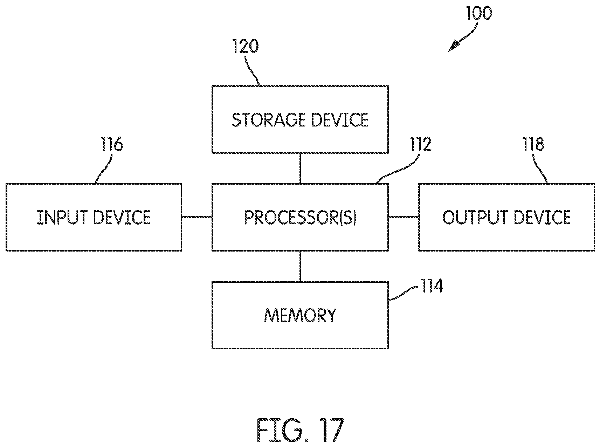

FIG. 17 is a schematic diagram representing a computer system 100 for implementing the methods, according to an embodiment of the present invention. As shown in FIG. 17, computer system 110 comprises a processor (e.g., one or more processors) 112 and a memory 114 in communication with the processor 112. The computer system 100 may further include an input device 116 for inputting data (such as keyboard, a mouse or the like) and an output device 118 such as a display device for displaying results of the computation. The computer may further include or be in communication with a storage device 120 for storing data such as, but not limited to, a hard-drive, a network attached storage (NAS) device, a storage area network (SAN), etc. It must be appreciated that the term processor is used herein to encompass one or more processors. Where reference is made to a processor that term should be understood to encompass any of these computing arrangements.

As it can be appreciated from the above paragraphs, the system 100 is provided for determining the number of needed infill wells, infill locations, drilling schedule, water injection volume to achieve a desired oil recovery rate. The system 100 includes one or more processors 112 that are configured to: (a) generate a water injection influence (WII) map by mapping the connectivity parameters derived from a capacitance resistance model; (b) calculate a recovery factor (RF) versus pore volumes injected (PVI) for each injector influence region in one or more influence regions defined from the connectivity parameters; (c) determine a maximum of the recovery factor versus the pore volume injected using a curve fit extrapolation; (d) determine a volume of injection water needed or a number of injectors needed based on recovery factor (RF) versus pore volumes injected (PVI); (e) calculate a voidage replacement ratio (VRR) within each injector influence region; (f) determine a target voidage replacement ratio (VRR) by selecting an average voidage replacement ratio (VRR) with a most recent interval of time, the target voidage replacement ratio (VRR) corresponding to a ratio between a volume of oil produced and a volume of water injected; and (g) determine a number of infill wells with drilling schedule to maintain the determined target voidage ratio (VRR).

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the scope of the appended claims. For example, it is to be understood that the present invention contemplates that, to the extent possible, one or more features of any embodiment can be combined with one or more features of any other embodiment.

Furthermore, since numerous modifications and changes will readily occur to those of skill in the art, it is not desired to limit the invention to the exact construction and operation described herein. Accordingly, all suitable modifications and equivalents should be considered as falling within the scope of the invention.

## Claims

1. A computer-implemented method of map based assessment of waterflood, the method comprising:
generating a water injection influence map (S16) by mapping one or more connectivity parameters derived from a capacitance resistance model;
calculating a recovery factor and pore volumes injected for each injector influence region (S18) in one or more influence regions defined from the one or more connectivity parameters;
determining (S20) a maximum of the recovery factor versus the pore volume injected using a curve fit extrapolation, for each influence region;
determining (S22) a number of injectors needed based on recovery factor versus pore volumes injected data, for each influence region;
calculating (S24) a voidage replacement ratio within each injector influence region;
determining (S26) a target voidage replacement ratio by selecting an average voidage replacement ratio with a most recent interval of time, the target voidage replacement ratio corresponding to a ratio between a volume of oil produced and a volume of water injected; and
determining (S28) a number of infill wells with drilling schedule to maintain the determined target voidage replacement ratio,
wherein determining (S28) the number of infill wells with drilling schedule to maintain the determined target voidage replacement ratio comprises:
adding (S40) the number of injectors obtained from the recovery factor versus pore volumes injected data for each influence region to a production profile for that influence region;
adding (S42) producers through time while maintaining target voidage replacement ratio in each influence region; and
iterating between adding injectors (S40) and adding producers (S42) while maintaining target voidage replacement ratio in each influence region until the number of infill wells honors the target voidage replacement ratio (S44).

2. The method according to claim 1, further comprising: inputting data into the capacitance resistance model, the data including production and injection; and defining one or more injector influence regions from producer-to-injector connectivity parameters derived from the capacitance resistance model.

3. The method according to claim 1, further comprising: determining the number of infill wells, the drilling schedule, infill well locations, desired injection, production profiles using both the number of infill wells to maintain a voidage replacement ratio and a number of needed injectors obtained from the recovery factor versus the pore volumes injected and a predefined type curve for infill well production volumes.

4. The method according to claim 1, wherein:
inputting data further comprises inputting time periods from producer-to-injector connectivity parameters; or
defining injector influence regions comprises defining a region for each injector of a plurality of injectors and an injector influence region size depends on a permeability of region, an amount of injection volume, or both.

5. The method according to claim 1, further comprising allocating injection and production volumes using the producer-to-injector connectivity parameters,
optionally wherein the allocated injection at injector i is equal to the product of parameter Fij by the water injection rate from injector i.

6. The method according to claim 1, wherein determining the maximum of the recovery factor versus the pore volume injected comprises determining the value of the pore volume injected corresponding to the maximum recovery factor.

7. The method according to claim 1, further comprising:
calculating a difference between the pore volume injected corresponding to the maximum recovery factor and the pore volume injected corresponding to the highest calculated real recovery factor based on historical data; or
calculating associated incremental oil at the maximum recovery factor and determining needed injection volume to hit target pore volumes injected.

8. The method according to claim 1, wherein the target voidage replacement ratio varies with a number of injectors.

9. The method according to claim 1, wherein determining the number of infill wells with drilling schedule to maintain the determined target voidage ratio comprises iterating between the dependence of recovery factor on pore volume injected and voidage replacement ratio in order to honor the recovery factor vs. pore volume injected performance curve and the target replacement ratio.

10. The method according to claim 9, wherein the iterating comprises iterating for each water influence or injection region.

11. The method according to claim 9, further comprising determining the recovery factor vs. pore volume injected and voidage replacement ratio for the whole field including all regions so as to verify that the results are within expected ranges values.

12. The method according to claim 1, wherein inputting data into the capacitance resistance model further comprises inputting flowing bottom hole pressure.

13. The method according to claim 1, further comprising determining a high side voidage replacement ratio corresponding to a point in time of better waterflood performance.

14. A computer system (100) for map based assessment of waterflood, the system (100) comprising a processor (112) configured to carry out the method of any of the preceding claims.

15. A computer program comprising instructions which, when executed by a computer, cause the computer to carry out the method of any of claims 1 to 13.

## Patentansprüche

1. Rechner-implementiertes Verfahren zur kartenbasierten Bewertung einer Wasserflutung, das Verfahren umfassend
Erzeugen einer Einflusskarte für Wasserinjektion (S16) durch Kartographieren eines oder mehrerer Konnektivitätsparameter, abgeleitet von einem Kapazitätswiderstandsmodell;
Berechnen eines Wiedergewinnungsfaktors und von für jeden Injektoreinflussbereich (S18) injizierten Porenvolumen in einem oder mehreren Einflussbereichen, abgeleitet von dem einen oder den mehreren Konnektivitätsparametern;
Bestimmen (S20) eines Maximums für den Wiedergewinnungsfaktors gegenüber dem injizierten Porenvolumen mit Hilfe einer Kurvenpassungs-Extrapolation, für jeden Einflussbereich;
Bestimmen (S22) einer Anzahl benötigter Injektoren auf der Basis von Daten von Wiedergewinnungsfaktor gegenüber dem injizierten Porenvolumen, für jeden Einflussbereich;
Berechnen (S24) eines Leerersatzverhältnisses innerhalb jeden Injektoreinflussbereichs;
Bestimmen (S26) eines Ziel-Leerersatzverhältnisses durch Auswählen eines durchschnittlichen Leerersatzverhältnisses mit einem neuesten Zeitintervall, wobei das Ziel-Leerersatzverhältnis einem Verhältnis zwischen einem Volumen hergestellten Öls und einem Volumen injizierten Wassers entspricht; und
Bestimmen (S28) einer Anzahl Einfüllbohrlöcher mit Bohrungsplan zum Erhalten des bestimmten Ziel-Leerersatzverhältnisses,
wobei Bestimmen (S28) der Anzahl Einfüllbohrlöcher mit Bohrungsplan zum Erhalten des bestimmten Ziel-Leerersatzverhältnisses umfasst
Addieren (S40) der Anzahl Injektoren, erhalten aus dem Wiedergewinnungsfaktor gegenüber den injizierten Porenvolumendaten für jeden Einflussbereich zu einem Produktionsprofil für diesen Einflussbereich;
Addieren (S42) von Förderung durch Zeit, während ein Ziel-Leerersatzverhältnis in jedem Einflussbereich erhalten wird; und
Iterieren zwischen Addieren von Injektoren (S40) und Addieren von Förderung (S42), während ein Ziel-Leerersatzverhältnis in jedem Einflussbereich erhalten wird, bis die Anzahl Einfüllbohrlöcher dem Ziel-Leerersatzverhältnisgerecht wird (S44).

2. Verfahren gemäß Anspruch 1, zudem umfassend Eingeben von Daten in das Kapazitätswiderstandsmodell, wobei die Daten Förderung und Injektion umfassen; und Definieren eines oder mehrerer Injektoreinflussbereiche aus Förderung-zu-Injektor-Konnektivitätsparametern, abgeleitet aus dem Kapazitätswiderstandsmodell.

3. Verfahren gemäß Anspruch 1, zudem umfassend Bestimmen der Anzahl Einfüllbohrlöcher, des Bohrungsplans, der Einfüllbohrlochorte, der gewünschten Injektion, von Förderprofilen mit Hilfe sowohl der Anzahl Einfüllbohrlöcher zum Erhalten eines Leerersatzverhältnisses und einer Anzahl benötigter Injektoren, erhalten aus dem Wiedergewinnungsfaktor gegenüber dem injizierten Porenvolumen und einer vorbestimmten Typenkurve für Einfüllbohrlochfördervolumen.

4. Verfahren gemäß Anspruch 1, wobei
Eingeben von Daten zudem umfasst Eingeben von Zeitdauern aus Förderung-zu-Injektor-Konnektivitätsparametern; oder
Definieren von Injektoreinflussbereichen umfasst Definieren eines Bereichs für jeden Injektor aus einer Mehrzahl Injektoren und wobei die Größe eines Injektoreinflussbereichs von einer Permeabilität eines Bereichs, einer Menge Injektionsvolumen oder beiden abhängt.

5. Verfahren gemäß Anspruch 1, zudem umfassend Zuordnen von Injektions- und Fördervolumen mit Hilfe der Förderung-zu-Injektor-Konnektivitätsparameter,
wahlweise, wobei die zugeordnete Injektion am Injektor i gleich dem Produkt aus Parameter Fij durch die Wasserinjektionsgeschwindigkeit aus Injektor i ist.

6. Verfahren gemäß Anspruch 1, wobei Bestimmen eines Maximums für den Wiedergewinnungsfaktor gegenüber dem injizierten Porenvolumen umfasst Bestimmen des Werts des injizierten Porenvolumens, das dem Maximum für den Wiedergewinnungsfaktor entspricht.

7. Verfahren gemäß Anspruch 1, zudem umfassend
Berechnen einer Differenz zwischen dem injizierten Porenvolumen, das dem Maximum für den Wiedergewinnungsfaktor entspricht, und dem injizierten Porenvolumen, das dem höchsten berechneten realen Wiedergewinnungsfaktor auf Basis historischer Daten entspricht; oder
Berechnen von zugehörigem inkrementellem Öl beim Maximum für den Wiedergewinnungsfaktor und Bestimmen eines benötigten Injektionsvolumens zum Erreichen des Ziels für injiziertes Porenvolumen.

8. Verfahren gemäß Anspruch 1, wobei das Ziel-Leerersatzverhältnis mit der Anzahl Injektoren variiert.

9. Verfahren gemäß Anspruch 1, wobei Bestimmen der Anzahl Einfüllbohrlöcher mit Bohrungsplan zum Erhalten des bestimmten Ziel-Leerersatzverhältnisses umfasst Iterieren zwischen der Abhängigkeit von Wiedergewinnungsfaktor von injiziertem Porenvolumen und Leerersatzverhältnis, um der Leistungskurve von Wiedergewinnungsfaktor gegenüber injiziertem Porenvolumen und dem Ziel-Leerersatzverhältnis gerecht zu werden.

10. Verfahren gemäß Anspruch 9, wobei das Iterieren umfasst Iterieren für jeden Wassereinfluss oder jeden Injektionsbereich.

11. Verfahren gemäß Anspruch 9, zudem umfassend Bestimmen des Wiedergewinnungsfaktors gegenüber injiziertem Porenvolumen und Leerersatzverhältnis für das ganze Feld, einschließlich aller Bereich, um so zu prüfen, dass die Ergebnisse innerhalb der erwarteten Wertebereiche sind.

12. Verfahren gemäß Anspruch 1, wobei Eingeben von Daten in das Kapazitätswiderstandsmodell zudem umfasst Eingeben von Flussbohrlochsohlendruck.

13. Verfahren gemäß Anspruch 1, zudem umfassend Bestimmen eines hochseitigen Leerersatzverhältnisses, entsprechen einem Zeitpunkt mit besserer Wasserflutungsleistung.

14. Rechnersystem (100) für eine kartenbasierte Bewertung einer Wasserflutung, das System (100) umfassend einen Prozessor (112), ausgelegt zum Ausführen des Verfahrens aus irgendeinem der vorhergehenden Ansprüche.

15. Rechnerprogramm, umfassend Instruktionen, die, werden sie auf einem Rechner ausgeführt, den Rechner dazu veranlassen, das Verfahren aus irgendeinem der Ansprüche 1 bis 13 auszuführen.

## Revendications

1. Procédé mis en oeuvre par ordinateur pour évaluer des mises en eau à base de cartes, le procédé comprenant :
générer une carte d'influence d'injection d'eau (S16) en cartographiant un ou plusieurs paramètres de connectivité dérivés d'un modèle de résistance-capacitance ;
calculer un facteur de récupération et des volumes de pores injectés pour chaque région d'influence d'injecteur (S18) dans une ou plusieurs régions d'influence définies à partir de l'un ou des plusieurs paramètres de connectivité ;
déterminer (S20) un maximum du facteur de récupération en relation avec le volume de pores injecté en utilisant une extrapolation d'ajustement de courbe, pour chaque région d'influence ;
déterminer (S22) un nombre d'injecteurs requis à base des données du facteur de récupération en relation avec le volume de pores injecté, pour chaque région d'influence ;
calculer (S24) un rapport de remplacement de vide dans chaque région d'influence d'injecteur ;
déterminer (S26) un rapport cible de remplacement de vide en sélectionnant un rapport de remplacement de vide moyen avec un intervalle de temps le plus récent, où le rapport cible de remplacement de vide correspond à un rapport entre un volume d'huile produit et un volume d'eau injecté ; et
déterminer (S28) un nombre de puits intercalaires avec plan de forage pour maintenir le rapport cible de remplacement de vide déterminé ;
où déterminer (S28) un nombre de puits intercalaires avec plan de forage pour maintenir le rapport cible de remplacement de vide déterminé comprend :
ajouter (S40) le nombre d'injecteurs obtenus du facteur de récupération en relation avec le volume de pores injecté pour chaque région d'influence à un profil de production pour cette région d'influence ;
ajouter (S42) des producteurs par temps en maintenant le rapport cible de remplacement de vide dans chaque région d'influence ; et
itérer entre ajouter des injecteurs (S40) et ajouter des producteurs (S42) en maintenant le rapport cible de remplacement de vide dans chaque région d'influence jusqu'à ce que le nombre de puits intercalaires honore le rapport cible de remplacement de vide (S44).

2. Procédé selon la revendication 1, comprenant en plus: entrer des données dans le modèle de résistance-capacitance, les données comprenant production et injection ; et définir une ou plusieurs régions d'influence d'injecteur de paramètres de connectivité producteur-injecteur dérivés du modèle de résistance-capacitance.

3. Procédé selon la revendication 1, comprenant en plus : déterminer le nombre de puits intercalaires, le plan de forage, des endroits de puits intercalaires, une injection désirée, des profils de production en utilisant à la fois le nombre de puits intercalaires pour maintenir un rapport de remplacement de vide et un nombre d'injecteurs requis obtenu du facteur de récupération en relation avec le volume de pores injecté et une courbe type prédéfinie pour des volumes de production de puits intercalaires.

4. Procédé selon la revendication 1, dans lequel :
entrer des données comprend en plus entrer des intervalles de temps de paramètres de connectivité producteur-injecteur, et
définir des régions d'influence d'injecteur comprend définir une région pour chaque injecteur d'une pluralité d'injecteurs et une taille de région d'influence d'injecteur dépend d'une perméabilité de région, d'une quantité de volume d'injection, ou des deux.

5. Procédé selon la revendication 1, comprenant en plus allouer des volumes d'injection et de production en utilisant les paramètres de connectivité producteur-injecteur,
éventuellement où l'injection allouée à l'injecteur i est égale au produit de paramètre Fij avec la vitesse d'injection d'eau de l'injecteur i.

6. Procédé selon la revendication 1, dans lequel déterminer le maximum du facteur de récupération en relation avec le volume de pores injecté comprend déterminer la valeur du volume de pores injecté correspondant au facteur de récupération maximal.

7. Procédé selon la revendication 1, comprenant en plus :
calculer une différence entre le volume de pores injecté correspondant au facteur de récupération maximal et le volume de pores injecté correspondant facteur de récupération réel calculé le plus élevé à base de données historiques ; ou
calculer de l'huile incrémentale associée au facteur de récupération maximal et déterminer le volume d'injection requis pour atteindre les volumes de pore cible injectés.

8. Procédé selon la revendication 1, dans lequel le rapport cible de remplacement de vide varie avec le nombre d'injecteurs.

9. Procédé selon la revendication 1, dans lequel déterminer le nombre de puits intercalaires avec plan de forage pour maintenir le rapport cible de remplacement de vide déterminé comprend itérer entre la dépendance du facteur de récupération au volume de pore injecté et le rapport de remplacement de vide pour honorer la courbe de performance du facteur de récupération en relation avec le volume de pores injecté et le rapport cible de remplacement.

10. Procédé selon la revendication 9, dans lequel l'itération comprend itérer pour chaque influence d'eau ou région d'injection.

11. Procédé selon la revendication 9, comprenant en plus déterminer le facteur de récupération en relation avec le volume de pores injecté et rapport de remplacement de vide pour le champ entier, y compris toutes les régions pour ainsi vérifier que les résultats sont à l'intérieur des intervalles de valeurs attendus.

12. Procédé selon la revendication 1, dans lequel entrer des données dans le modèle de capacitance-résistance comprend en plus entrer une pression d'écoulement de trou inférieur.

13. Procédé selon la revendication 1, comprenant en plus déterminer un rapport de remplacement de vide au côté élevé correspondant à un point de temps de performance meilleure de mise en eau.

14. Système d'ordinateur (100) pour évaluer des mises en eau à base de cartes, le système (100) comprenant un processeur (112) configuré pour exécuter le procédé d'une quelconque des revendications précédentes.

15. logiciel d'ordinateur comprenant des instructions qui, exécutées par un ordinateur, amènent l'ordinateur à exécuter le procédé d'une quelconque des revendications 1 à 13.
